# EUROPÄISCHE PATENTSCHRIFT

(11) **EP 2 245 326 B1**
(45) Veröffentlichungstag und Bekanntmachung des Hinweises auf die Patenterteilung: **07.09.2011**
(21) Anmeldenummer: 08860625.6
(22) Anmeldetag: 02.12.2008
(51) Int. Cl.: F16D 48/06

(54) **VERFAHREN ZUR ERMITTLUNG DES AXIALEN VERSCHLEISSES UND DER GEGENKRAFTSTEIGUNG BEI EINEM LAMELLENSCHALTELEMENT**
METHOD FOR DETERMINING THE AXIAL WEAR AND THE COUNTERFORCE GRADIENT IN A MULTIPLE DISC SWITCHING ELEMENT
PROCEDE DE DETERMINATION DE L'USURE AXIALE ET DE L'ACCROISSEMENT DE LA FORCE OPPOSEE SUR UN ELEMENT DE COMMUTATION A LAMELLES

(30) Priorität: 10.12.2007 DE 102007055743
(43) Veröffentlichungstag der Anmeldung: 03.11.2010
(73) Patentinhaber: ZF Friedrichshafen AG, 88038 Friedrichshafen (DE)
(72) Erfinder: DENZLER, Rainer, 88255 Baienfurt (DE); VOGEL, Volker, 88045 Friedrichshafen (DE)
(86) Internationale Anmeldenummer: PCT/EP2008/066578
(87) Internationale Veröffentlichungsnummer: WO 2009/074481

(56) Entgegenhaltungen:
- EP-A- 1 384 912
- DE-A1- 10 236 540
- DE-A1- 19 700 936
- DE-A1-102005 022 396
- US-A1- 2005 148 429
- US-A1- 2007 267 268
- US-B1- 6 771 031

## Beschreibung

Die vorliegende Erfindung bezieht sich auf ein Verfahren zur Ermittlung des axialen Verschleißes und der Gegenkraftsteigung bei einem Lamellenschaltelement mit lagegeregelter Ansteuerung gemäß dem Oberbegriff des Patentanspruchs 1.

Aus dem Stand der Technik ist bekannt, Lamellenschaltelemente eines Antriebsstrangs derart anzusteuern, dass das von dem Schaltelement zu übertragende Moment über ein Motormoment eines Elektromotors, über einen Kupplungsdruck eines Druckstellers oder über eine Anziehungskraft eines Elektromagneten eingestellt wird. Hierbei entsteht bei den bekannten moment-, druck-, oder kraftbasierten Ansteuerungsverfahren der Nachteil, dass starke Hystereseeffekte auftreten, die die Stellgenauigkeit des zu übertragenden Momentes in nachteiliger Weise beeinträchtigen.

Aus der noch nicht veröffentlichten DE-Patentanmeldung der Anmelderin mit dem amtlichen Aktenzeichen 10 2006 056 515.0 geht ein Verfahren zur Ansteuerung einer Kupplung hervor, wobei das von der Kupplung zu übertragende Moment elektromechanisch, hydraulisch oder elektromagnetisch kontinuierlich eingestellt wird, im Rahmen dessen das zu übertragende Kupplungsmoment unter Verwendung einer lageabhängigen Kupplungsmomentvorgabe eingestellt wird. Dadurch können die Hystereseeffekte weitgehend vermieden werden.

Bei dem bekannten Verfahren besteht für den Fall einer elektromechanischen Einstellung des Momentes zwischen dem Drehwinkel des Elektromotors und der Kupplungslage, nämlich der Position eines beweglichen Kupplungsteils, eine proportionale Abhängigkeit, so dass über die Elektromotorlageregelung eine Kupplungslageregelung erfolgt. Hierbei wird die Drehbewegung des Elektromotors über eine Stimradstufe und eine Kugelrampe auf das bewegliche Kupplungsteil übertragen.

Derartige Systeme mit lagegeregelter Ansteuerung einer Lamellenkupplung oder Lamellenbremse unterilegen Veränderungen durch axialen Verschleiß der Lamellen, wobei sich dadurch auch die Gegenkraftsteigung bzw. der Steifigkeit des Systems verändert. Zudem gibt es für den Fall einer elektromechanischen Aktuierung mittels einer Stimradstufe und einer Kugelrampe störende Einflüsse durch unterschiedliches Temperaturverhalten, Hystereseeffekte und die Hakeligkeit des Systems, bedingt durch die Zahneingriffe in der geradverzahnten Stirnradstufe zwischen dem Elektromotor und der Kugelrampe.

Die EP 1 384 912 A1 offenbart ein Verfahren zur Ermittlung eines Verschleißes einer zwischen einem Fahrzeugmotor und einem Fahrzeuggetriebe angeordneten Trennkupplung, bei welchem mittels eines Elektromotors über eine Getriebestufe, einem Ausrückhebel und Tellerfedern die Trennkupplung bei einem Fahrzeugstillstand lagegeregelt vollständig aus- und eingerückt wird, wobei die beim Aus- und Einrücken ermittelten Werte gemittelt werden, um Hysterese-bedingte Fehler zu eliminieren.

Die US 6,771,031 B1 offenbart eine Vorrichtung zur Betätigung einer Lamellenkupplung, umfassend einen Elektromotor, eine von dem Elektromotor angetriebene Stimradstufe und eine der Stimradstufe antriebstechnisch nachgelagerte Kugelspindel, welche auf die Lamellenkupplung wirkt. Hierbei wird eine Drehbewegung des Elektromotors mittels der Stimradstufe übersetzt und auf eine Seite der Kugelspindel übertragen, welche die Drehbewegung in eine Axialbewegung einer anderen Seite der Kugelspindel umwandelt. Die Axialbewegung wirkt dabei auf die Lamellenkupplung, wodurch je nach Drehrichtung des Elektromotors eine Schließ- oder Öffnungsbewegung der Lamellenkupplung erzeugbar ist.

Der vorliegenden Erfindung liegt die Aufgabe zugrunde, ein Verfahren zur Ermittlung des axialen Verschleißes und der Gegenkraftsteigung bzw. der Steifigkeit des Systems bei einem Lamellenschaltelement mit lagegeregelter Ansteuerung mittels einer Stirnradstufe und einer Kugelrampe anzugeben, welches möglichst genaue Resultate liefert. Hierbei sollen die Resultate weitgehend unabhängig von den störenden Einflüssen Hakeligkeit und Hysterese sein.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur Ermittlung des axialen Verschleißes und der Gegenkraftsteigung bzw. der Steifigkeit des Systems bei einem Lamellenschaltelement mit lagegeregelter Ansteuerung vorgeschlagen, im Rahmen dessen der axiale Verschleiß und die Gegenkraftsteigung bzw. die Steifigkeit des Systems mittels einer Nachlaufadaption bei Stillstand des Fahrzeugs ermittelt werden.

Gemäß der Erfindung wird bei Stillstand des Fahrzeugs der komplette Arbeitsbereich der Lamellen durch eine auf- und absteigende lagegeregelte Rampe abgefahren. Durch die Lageregelung können Stehenbleiber, d.h. Situationen, bei denen sich die Lage bei Variation des Momentes nicht ändert, auf ein geringstes Maß vermindert werden, wodurch der Einfluss der Hakeligkeit für den Fall, dass eine Stirnradstufe vorgesehen ist, in vorteilhafter Weise begrenzt werden kann.

Des weiteren wird gemäß der Erfindung mit einer elektromechanischen Aktuierung mittels einer Stirnradstufe und einer Kugelrampe durch eine Variation des Motormoments des Elektromotors die Hysterese der abgefahrenen Rampe klein gehalten, derart, dass durch die somit erzielbare hohe Qualität der auf- und absteigenden Lagerampe nicht nur der axiale Verschleiß der Lamelle, sondern auch die Gegenkraftsteigung des Systems gemessen werden kann.

Gemäß einer vorteilhaften Ausgestaltung der Erfindung erfolgt die Ermittlung des axialen Verschleißes des Lamellenpakets sowie der Gegenkraftsteigung des Systems durch Mittelung der entsprechenden gemessenen Werte für die auf- und absteigende Rampe.

Die Erfindung wird im folgenden anhand der beigefügten Figuren anhand einer Lamellenkupplung mit lagegeregelter elektromechanischer Ansteuerung mittels eines Elektromotors beispielhaft näher erläutert. Es zeigen:
- Figur 1:: Eine schematische Darstellung eines Systems, um- fassend eine Lamellenkupplung mit lagegeregelter Ansteuerung, bei der über eine Elektromotorlagere- gelung über eine Stirnradstufe und eine Kugelrampe eine Kupplungslageregelung erfolgt;
- Figur 2:: Ein Motormoment-Motorwinkel Diagramm zur Ver- anschaulichung des axialen Verschleißes und der Veränderung der Gegenkraftsteigung bzw. der Stei- figkeit des Systems; und
- Figur 3:: Ein Motormoment-Motorwinkel Diagramm zur Ver- anschaulichung des erfindungsgemäßen Verfah- rens.

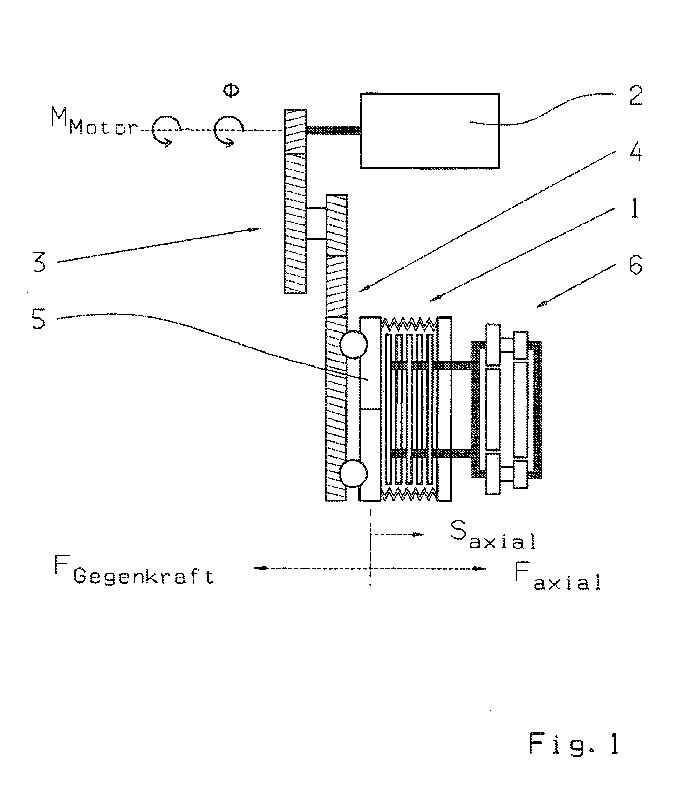

In Figur 1 ist eine Lamellenkupplung 1 dargestellt, welche lagegeregelt ansteuerbar ist; hierbei erfolgt die Lageregelung durch einen Elektromotor 2, dessen Drehbewegung über eine Stirnradstufe 3 und eine Kugelrampe 4 auf ein axial bewegliches Kupplungsteil 5 übertragen wird. In der Figur ist zudem ein mit der Abtriebsseite der Kupplung 1 verbundenes Planetengetriebe 6 dargestellt.

Mit Fₐₓᵢₐₗ ist die auf das Lamellenpaket der Kupplung 1 ausgeübte Kraft und mit F_{Gegenkraft} die vom System erzeugte Gegenkraft, die der Steifigkeit des Systems entspricht, bezeichnet. Ferner ist mit Sₐₓᵢₐₗ die axiale Verschiebung des axial beweglichen Kupplungsteils 5 aufgrund der Drehbewegung des Elektromotors 2 um einen Drehwinkel φ mit einem Moment Mₘₒₜₒᵣ bezeichnet.

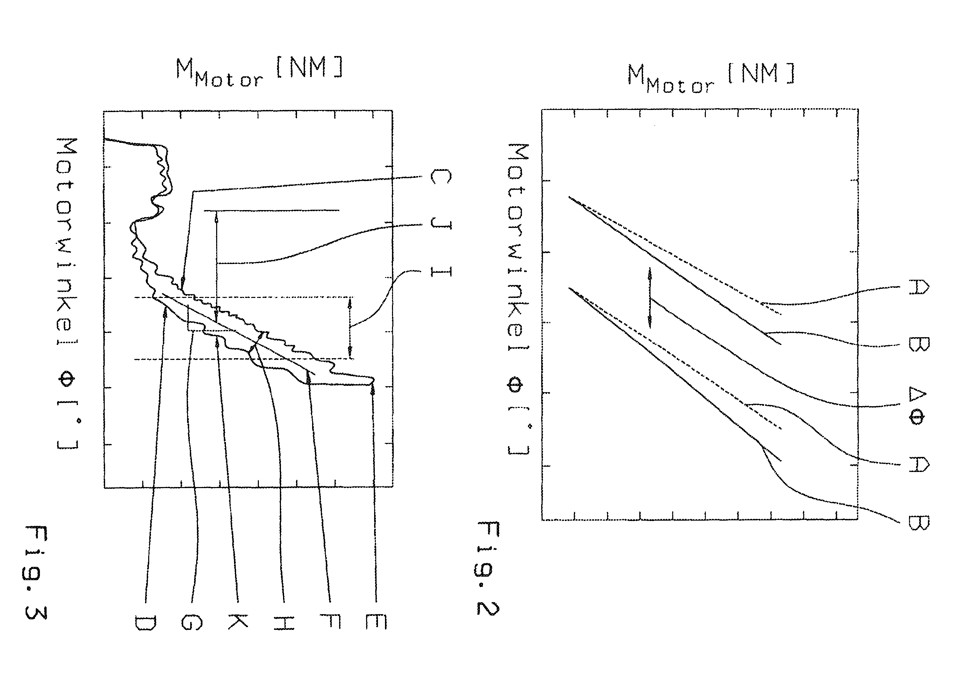

In Figur 2 ist anhand eines Moment - Motorwinkel - Diagramms die Veränderung des Regelsystems der Kupplung aufgrund des axialen Verschleißes und der Veränderung der Gegenkraftsteigung bzw. der Steifigkeit des Systems veranschaulicht. Δφ bezeichnet hierbei die Differenz hinsichtlich des Drehwinkeils φ des Elektromotors, der erforderlich ist, um eine axiale Verschiebung des axial beweglichen Kupplungsteils zu bewirken bzw. die durch den axialen Verschleiß bewirkte Winkeldifferenz bei identischem Kupplungsmoment.

In Figur 2 stellt Kurve A die Gegenkraft-Kennlinie bei einem vorgegebenen axialen Verschleiß dar, wobei Kurve B eine Gegenkraft-Kennlinie des selben Systems bei unterschiedlichem axialen Verschleiß ist. Daraus wird ersichtlich, dass die Kenntnis der aktuellen Gegenkraft-Kennlinie für die lagegeregelte Ansteuerung der Kupplung von besonderer Bedeutung ist, da das vom Elektromotor gelieferte Moment der Gegenkraft - Kennlinie bzw. der Gegenkraftsteigung angepasst werden soll.

Gemäß der Erfindung und bezugnehmend auf Figur 3 wird zur Vermessung des axialen Verschleißes und der Gegenkraftsteigung bzw. der Steifigkeit des Systems bei einem Lamellenschaltelement mit lagegeregelter Ansteuerung vorgeschlagen, den axialen Verschleiß und die Gegenkraftsteigung bzw. die Steifigkeit des Systems mittels einer Nachlaufadaption bei Stillstand des Fahrzeugs zu erfassen.

Erfindungsgemäß wird bei Stillstand des Fahrzeugs der komplette Arbeitsbereich I der Lamellen der Kupplung durch eine auf- und absteigende lagegeregelte Rampe abgefahren. Hierbei wird in Abhängigkeit vom Motorwinkel das Moment derart erhöht, dass das axial bewegliche Kupplungsteil 5 verschoben werden kann. Durch diese Konzeption werden Stehenbleiber weitgehend vermieden, wodurch der Einfluss der Hakeligkeit der Stirnradstufe erheblich begrenzt wird. Ein Stehenbleiber ist in Figur 3 mit K bezeichnet.

In Figur 3 ist die einfahrende Rampe mit C und die ausfahrende Rampe mit D bezeichnet, wobei der Übergang zwischen den Rampen mit E bezeichnet ist. Des weiteren ist in Figur 3 die Gegenkraft-Kennlinie mit F bezeichnet, deren Steigung durch das Steigungsdreieck G veranschaulicht wird.

Gemäß der Erfindung wird durch eine systembedingte Variation des Motormoments des Elektromotors (d.h. des Lagereglers) die Hysterese H der abgefahrenen Rampe klein gehalten, so dass durch die somit erzielbare hohe Qualität der auf- und absteigenden Rampe C, D neben dem axialen Verschleiß der Lamelle auch die Gegenkraftsteigung bzw. die Steifigkeit des Systems gemessen werden kann. In Figur 3 ist der axiale Verschleiß der Kupplung mit J bezeichnet. Die Variation des Motormoments entspricht dem "Zittern" bei den Rampen C, D.

Gemäß einer vorteilhaften Ausgestaltung der Erfindung erfolgt die Bestimmung des axialen Verschleißes J der Lamellen sowie der Gegenkraft - Kennlinie F bzw. der Gegenkraftsteigung des Systems (d.h. der Gegenkraft-Kennlinie) durch Mittelung der für die auf- und absteigende Rampe C, D gemessenen Werte. Bei dem gezeigten Beispiel wird der axiale Verschleiß als Intervall zwischen einer Nullposition und der Mitte des Arbeitsbereiches der Lamellen definiert.

### Bezugszeichen

- 1: Lamellenkupplung
- 2: Elektromotor
- 3: Stirnradstufe
- 4: Kugelrampe
- 5: axial bewegliches Kupplungsteil
- 6: Planetengetriebe
- Fₐₓᵢₐₗ: auf das Lamellenpaket der Kupplung 1 ausgeübte Kraft
- F_{Gegenkraf}: Gegenkraft
- Sₐₓᵢₐₗ: axiale Verschiebung des axial beweglichen Kupplungsteils 5
- Mₘₒₜₒᵣ: Moment des Elektromotors
- φ: Drehwinkel des Elektromotors
- A: Gegenkraft-Kennlinie
- B: Gegenkraft-Kennlinie
- C: einfahrende Rampe
- D: ausfahrende Rampe
- E: Übergang zwischen den Rampen C und D
- F: Gegenkraft-Kennlinie
- G: Steigungsdreieck
- H: Hysterese
- I: Arbeitsbereich der Lamellen der Kupplung 1
- J: axialer Verschleiß der Kupplung 1
- K: Stehenbleiber

## Patentansprüche

1. Verfahren zur Ermittlung des axialen Verschleißes und der Gegenkraftsteigung oder des axialen Verschleißes und der Steifigkeit des Systems bei einem Lamellenschaltelement (1) mit lagegeregelter Ansteuerung mittels eines Elektromotors (2), einer Stirnradstufe (3) und einer Kugelrampe (4), wobei der axiale Verschleiß (J) und die Gegenkraftsteigung oder der axiale Verschleiß und die Steifigkeit des Systems mittels einer Nachlaufadaption bei Stillstand des Fahrzeugs ermittelt werden und der komplette Arbeitsbereich (I) der Lamellen durch eine auf- und absteigende lagegeregelte Rampe (C, D) abgefahren wird, wobei durch eine Variation des Motormoments (Mₘₒₜₒᵣ) des Elektromotors (2) die Hysterese (H) der abgefahrenen Rampe (C, D) klein gehalten wird.

2. Verfahren zur Ermittlung des axialen Verschleißes und der Gegenkraftsteigung bei einem Lamellenschaltelement mit lagegeregelter Ansteuerung, nach Anspruch 1, wobei die Ermittlung des axialen Verschleißes (J) des Lamellenpakets und der Gegenkraftsteigung des Systems durch Mittelung der entsprechenden gemessenen Werte für die auf- und absteigende Rampe erfolgt.

## Claims

1. Method for determining the axial wear and the counterforce gradient or the axial wear and the rigidity of the system in a multiple disc switching element (1) with position-controlled actuation by means of an electric motor (2), a spur gear stage (3) and a ball ramp (4), wherein the axial wear (J) and the counterforce gradient or the axial wear and the rigidity of the system are determined by means of run-on adaptation in the stationary state of the vehicle, the entire working range (L) of the discs is travelled through by means of a rising and falling position-controlled ramp (C, D), wherein the hysteresis(H) of the travelled-through ramp (C, D) is kept small by varying the motor torque (Mₘₒₜₒᵣ) of the electric motor (2).

2. Method for determining the axial wear and the counterforce gradient in a multiple disc switching element with position-controlled actuation, according to Claim 1, wherein the axial wear (J) of the multiple disc package and the counterforce gradient of the system are determined by averaging the corresponding measured values for the rising and falling ramp.

## Revendications

1. Procédé pour déterminer l'usure axiale et l'augmentation de la force opposée ou de l'usure axiale et de la rigidité du système dans un élément de commutation à lamelles (1) avec commande régulée en position au moyen d'un moteur électrique (2), d'un rapport de pignon (3) et d'une rampe sphérique (4), l'usure axiale (J) et l'augmentation de la force opposée ou l'usure axiale et la rigidité du système étant déterminés au moyen d'une adaptation du fonctionnement par inertie à l'arrêt du véhicule, et la plage de travail complète (I) des lamelles étant parcourue par une rampe (C, D) avec régulation de position montante et descendante, l'hystérésis (H) de la rampe parcourue (C, D) étant maintenue faible par une variation du couple moteur (Mₘₒₜₒᵣ) du moteur électrique (2).

2. Procédé pour déterminer l'usure axiale et l'augmentation de la force opposée dans un élément de commutation à lamelles avec commande régulée en position selon la revendication 1, dans lequel la détermination de l'usure axiale (J) du paquet de lamelles et de l'augmentation de la force opposée du système a lieu par moyennage des valeurs mesurées correspondantes pour la rampe montante et descendante.
